# EUROPEAN PATENT APPLICATION

(11) **EP 0 926 871 A2**
(43) Date of publication of application: **30.06.1999**
(21) Application number: 98310051.2
(22) Date of filing: 08.12.1998
(51) Int. Cl.: H04M 3/50

(54) **Automatic transmission of a voice-to-text message**

(30) Priority: 17.12.1997 US 992115
(71) Applicant: LUCENT TECHNOLOGIES INC., Murray Hill, New Jersey 07974-0636 (US)
(72) Inventor: Cannon, Joseph M., Harleysville, Pennsylvania 19438 (US); Johanson, James A., Lehigh, Pennsylvania 18049 (US)
(74) Representative: Watts, Christopher Malcolm Kelway, Dr.

(57) **Abstract**

A voice messaging system includes an input device to accept a destination electronic messaging address, a memory to store a received voice message, a processor to operate an electronic messaging program and to prepare the voice message for electronic transmission, and a transmission device to automatically send the prepared voice message to the destination electronic messaging address. The present invention further provides a method for automatically sending a received voice message to a destination electronic messaging address, including inputting a destination electronic messaging address, storing a voice message, preparing the voice message as an electronic message, and automatically transmitting the voice message to the destination electronic messaging address.

## Description

### Field of the Invention

This invention relates generally to a digital voice messaging system. More particularly, it relates to a digital voice messaging system which forwards a received voice message to an electronic mail address.

### Description of Related Art

Today, many people use a digital or tape answering machine or voice mail system to receive and play back voice messages. A digital answering machine stores messages in solid state memory. A tape answering machine stores messages on magnetic tape. A voice messaging system is typically used in conjunction with a private branch exchange (PBX) to provide voice messaging capability to a plurality of users.

Currently, the conventional way to listen to a voice message recorded on a voice messaging system is to play the message directly from the answering machine or to dial in to the answering machine or voice messaging system to hear the message over the telephone when the user is away from the voice messaging system.

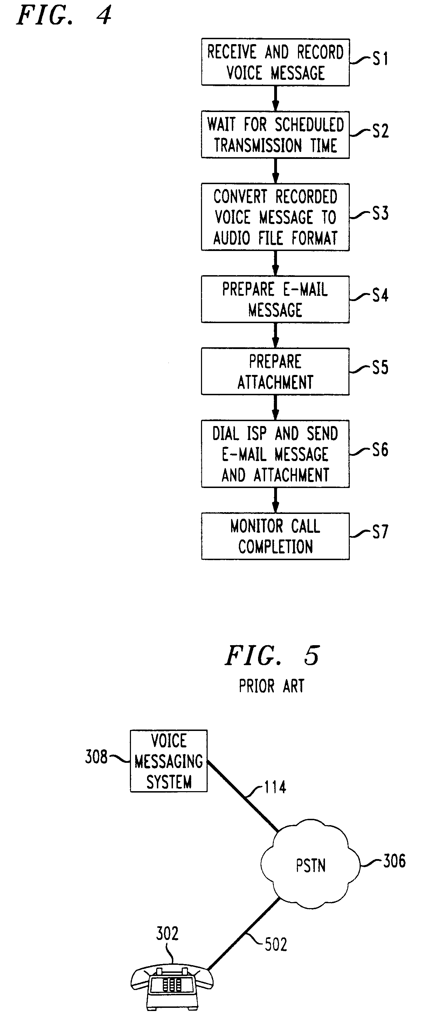

FIG. 5 shows a remote connection to a voice messaging system **308**. A user calls in to the voice messaging system **308** using a remote telephone **302** over telephone line **502** and public switched telephone network (PSTN) **306**. The user calls in to determine if any voice messages have been left, and if so, the user plays back the voice messages stored at the voice messaging system **308** over the telephone **302**. However, the user must repeatedly call in to the voice messaging system **308**, whether or not a voice message exists, to determine if a voice message does in fact exist. Needless to say, this is very inconvenient for the user. Although the user may determine that no voice messages exist without completing a call, e.g., based on the number of rings allowed by the voice messaging system **308**, the user must still call in repeatedly to the voice messaging system **308** to determine whether any voice messages have been left.

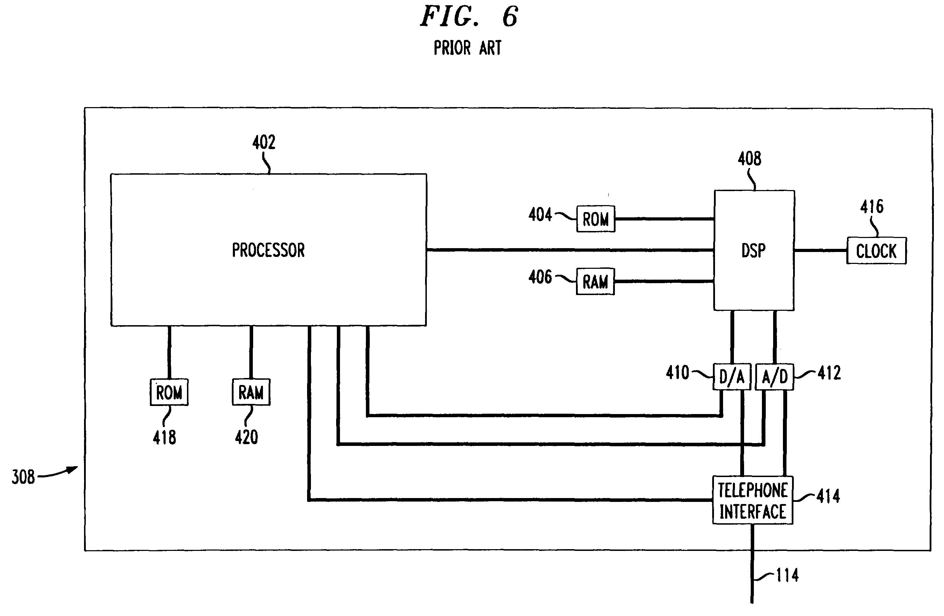

FIG. 6 illustrates a conventional voice messaging system **308** such as a digital answering machine which generally includes a processor **402** connected to a read-only memory (ROM) **418**, random-access memory (RAM) **420** which may be a dynamic random access memory (DRAM), static random access memory (SRAM), or other suitable memory, a digital signal processor (DSP) **408**, a digital-to-analog (D/A) converter **410**, an analog-to-digital (A/D) converter **412**, and a telephone interface **414**. The DSP **408** is connected to ROM **404** and RAM **406** which may be DRAM, SRAM, or other suitable memory. The ROM **404** and RAM **406** may be internal to processor **402** or DSP **408**. The A/D converter **412** and/or D/A converter **410** may be integrated within the DSP **408**. The digital answering machine **308** may be controlled by keypad entries entered on a telephone keypad (not shown) or by dual tone, multiple frequency (DTMF) tones received from remote locations over telephone line **114**.

Together with other components shown in FIG. 6, the DSP **408** converts an input analog signal to digital data, converts digital data to an output analog signal, and converts DTMF tones to digital data. To reduce the physical memory requirements in digital answering machine **308**, DSP **408** compresses voice message data for storage in RAM **406** and decompresses the voice message data for playback. Conventional voice compression and decompression techniques include linear predictive coding (LPC), code-excited linear predictive (CELP) coding, and vector sum excited linear predictive (VSELP) coding. These compression and decompression algorithms minimize the amount of data required to represent a voice message. The DSP **408** operates in response to a predetermined program of instructions stored in ROM **404**. The DSP **408** also includes a tone generator algorithm to provide DTMF tones to the telephone line **114** and a DTMF detector algorithm to detect DTMF tones for recording an incoming voice message if necessary or for playback of a previously stored voice message.

To store an incoming voice message in voice messaging system **308**, an input voice message is conveyed over the telephone line **114** to the telephone interface **414**, which in turn conveys the incoming voice message to the A/D converter **412**. The A/D converter **412** is capable of receiving voice and/or tone inputs from the telephone line **114**. The A/D converter **412** converts the electrical signals representative of the voice message to digital data, and conveys the digital data to the DSP **408**. The ROM **404** stores instructions for controlling the DSP **408** in implementing a compression algorithm. The DSP **408** compresses the digital data based on a compression algorithm stored in the ROM **404** to produce a compressed digital incoming voice message. RAM **406** receives and stores the compressed voice message. Using clock generator **416**, the DSP **408** may also provide a time and date stamp with the stored digital voice message in RAM **406**.

To operate the voice messaging system **308** in a remote message playback and DTMF detection mode, the user listens to a recorded message from a remote telephone **302** over telephone line **114** as shown in FIG. 5. To playback the stored voice message, the user inputs DTMF tones to remotely control the voice messaging system **308** such that the voice messages are played back audibly at the remote telephone **302**. The DTMF tones are received by the voice messaging system **308** over the telephone line **114** at the telephone interface **414** and are conveyed to the A/D converter **412**. The DSP **408** receives the DTMF tones and detects control signals which instruct voice message playback of voice messages stored in RAM **406**, which are then passed to the processor **402**. The processor **402** controls the playback of voice messages.

In response to control signals from the processor **402**, the DSP **408** retrieves compressed voice messages from RAM **406**. The DSP **408** decompresses the compressed voice messages to produce digital data, in accordance with a decompression algorithm stored in the ROM **404**. The ROM **404** also stores instructions for controlling the DSP **408** in implementing the decompression algorithm. The DSP **408** conveys digital voice message data to the D/A converter **410**. D/A converter **410** converts the digital voice message data to analog signals representative of an audible output and provides the analog signals to the telephone line **114** via telephone interface **414**. The user listens to the recorded voice message from a remote telephone **302** over the telephone line **502** as shown in FIG. 5.

The conventional digital voice messaging system **308**, however, does not automatically inform a remote user of an incoming voice message. Repeated remote access to the voice messaging system **308** from remote telephone **302** is very inconvenient for the user. Additionally, access fees and other telephone company charges may apply for the remote access to the voice messaging system **308**.

### Summary Of The Invention

In accordance with the principles of the present invention, a voice messaging system includes an input device to accept a destination e-mail address, a memory to store a received voice message, an e-mail program to send an e-mail message, and a transmission device to automatically send the voice message to the destination e-mail address.

The present invention further provides a method for automatically sending a received voice message to a destination e-mail address, including inputting a destination e-mail address, storing a voice message, placing the voice message in an e-mail message, and automatically sending the voice message to the destination e-mail address.

### Brief Description Of The Drawings

Features and advantages of the present invention will become apparent to those skilled in the art from the following description with reference to the drawings, in which:
FIG.1 shows the path of a digital voice messaging system sending a received voice message to a remote computer using electronic messaging according to an embodiment of the present invention.
FIG.2 shows a telephone answering device according to the first embodiment of the present invention.
FIG. 3 shows a computer screen including an electronic mail message and an attached voice message according to an embodiment of the present invention.
FIG. 4 is a flow diagram illustrating an operation of the digital answering machine according to an aspect of the present invention.
FIG. 5 shows the path of a conventional voice messaging system sending a voice message over a telephone network.
FIG. 6 shows a conventional digital answering machine.

### Detailed Description Of The Illustrative Embodiments

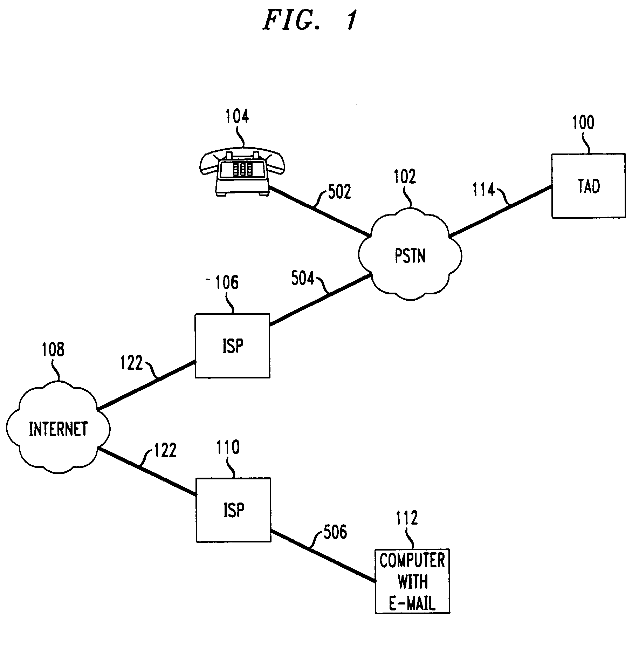

FIG. 1 shows a path of a digital voice messaging system sending a voice message over the Internet to a remote computer according to an embodiment of the present invention.

In FIG. 1, a user of a remote telephone **104** leaves a voice message on a telephone answering device (TAD) **100** (such as a digital answering machine or other voice messaging system) by calling the TAD **100** using remote telephone **104**. The remote telephone **104** is connected to the PSTN **102** via telephone line **502**. TAD **100** is connected to the PSTN **102** via telephone line **114**.

According to the principles of the present invention, the TAD **100** automatically e-mails a voice message to a remote location based on at least one e-mail destination address input into the TAD **100**. More than one e-mail address may be input into the TAD **100** with the results being that the voice message is e-mailed to a plurality of destinations.

In addition to the e-mail destination address, the user of the TAD **100** establishes a schedule in the TAD **100** for sending out e-mail messages to the input destination e-mail addresses. The e-mail message sent by the TAD **100** may be a conventional e-mail message pre-programmed into the TAD **100** indicating the number of voice messages that have been received by the TAD **100**, with appropriate attached voice message files. The digital voice message may be an attachment to the e-mail message sent by the TAD **100**. According to the pre-established schedule, the TAD **100** sends out each e-mail message and attached voice message to the destination e-mail address at predetermined times, e.g., at midnight, as soon as they are received by the TAD **100** or periodically throughout the day. The voice message file attached to the e-mail message may be in compressed or uncompressed format.

An e-mail subscriber assigned to the destination e-mail address input into the TAD **100** receives the e-mail message and attached voice message at, e.g., computer **112**. The computer **112** has the capabilities to receive e-mail with an attached file. In the exemplary embodiment, the e-mail message and the attached voice message file are sent from the TAD **100** to the computer **112** over the Internet **108** using respective Internet service providers (ISPs) **106**, **110**. Other electronic messaging schemes may alternatively be used, e.g., two-way paging.

The TAD **100** is connected to ISP **106** via the PSTN **102** and telephone lines **114**, **504**. The ISP **106** in turn is connected to the Internet **108** via a suitable high speed line **122** such as a T1 or T3 rate trunk line. The computer **112** is connected to the Internet **108** through ISP **110**, telephone line **506** and a suitable high speed line **122**. Alternatively, the TAD **100** may be connected to ISP **106** via a direct line such as coaxial cable, or an integrated services digital network (ISDN) line, or via a wireless link such as infrared (IR) or radio frequency (RF). The computer **112** may also be alternatively connected to ISP **110** via a direct line such as a coaxial cable, or an ISDN line.

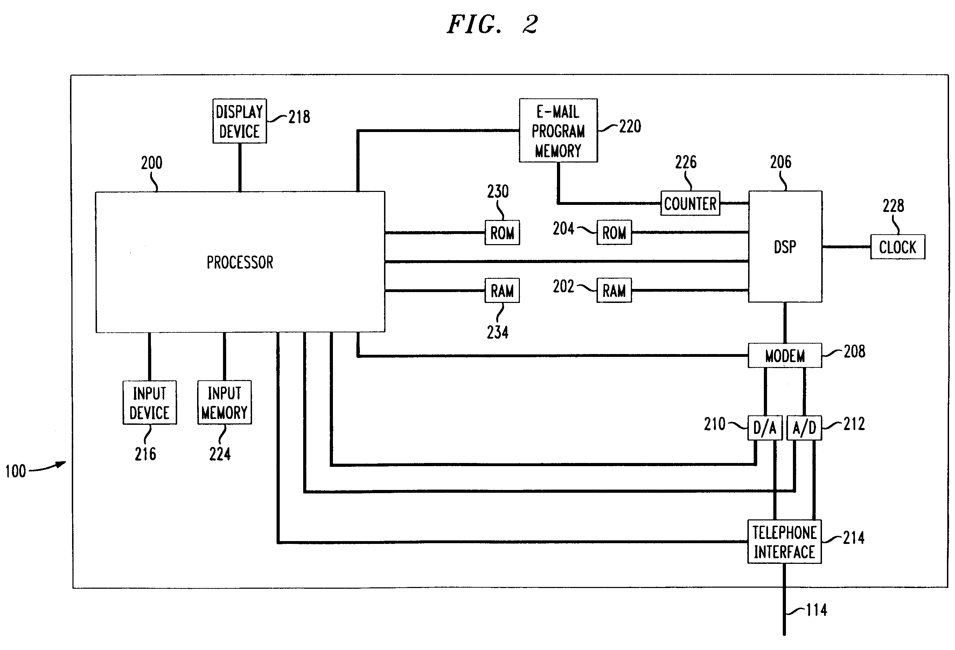

TAD **100** is a digital answering machine in the disclosed embodiment. The present invention is equally applicable to digital answering machines as it is to voice messaging systems in general, e.g., a voicemail system used in conjunction with a private branch exchange (PBX). FIG. 2 shows the TAD **100** in more detail, including a processor **200** connected to RAM **234**, ROM **230**, DSP **206**, D/A converter **210**, A/D converter **212**, telephone interface **214**, and DSP **206** connected to voice message storage RAM **202** and ROM **204**, which individually operate similarly to a conventional digital answering machine **308** such as that shown in FIG. 6. However, TAD **100** also has Internet access and dialing capabilities to an ISP, unlike the conventional digital answering machine shown in FIG. 6. Thus, TAD **100** further includes an input device **216**, an input memory **224**, an e-mail program memory **220**, and a modem **208**, all connected to processor **200**.

The TAD **100** may also include a clock generator **228** and display device **218** such as a liquid crystal display to view the data input by input device **216**. The display device **218** may also be used to view other information such as the date and time, the telephone number dialed for access to the Internet, or caller ID type information relating to an incoming call. The display device **218** may also be used to observe data received from the telephone line **114** through the modem **208** using a standard protocol for interfacing to a display-based telephone such as analog display services interface (ADSI).

The TAD **100** accepts input of at least one destination e-mail address for a received voice message. The TAD **100** may also accept input of at least one e-mailing schedule relating to when to send received voice messages to the input destination e-mail address. TAD **100** further sends received voice messages as e-mail attachments to standard, predetermined e-mail correspondence to the destination e-mail address based on the schedule. The e-mail is transmitted over the Internet. The destination e-mail address is stored in the input memory **224**. The voice message or messages stored in the audio message portion of RAM **202** will be sent to each destination e-mail address in the input memory **224**.

The schedule in TAD **100** indicates how often the voice message portion of RAM **202** should be checked for unsent voice messages, and how often the unsent voice messages should be electronically transferred to the destination e-mail address. The invention can optionally operate to request the return of an electronic message to the TAD **100** or other device indicating that the sent converted text message has been read. Voice messages can be e-mailed immediately upon reception or as a group on a timed basis, e.g., once a day. For example, the voice messages may be e-mailed to the destination address immediately after the voice message is received, at the next one of a designated interval such as every 20 minutes, or at designated times such as at midnight when telephone charges are presumed lowest. The e-mail feature may be turned off on TAD **100**, e.g., for times when the user is at home or local to the voice messaging system, or it can be controlled remotely through conventional DTMF sequences.

The destination e-mail address and/or transmission schedule may be programmed from a pre-existing internal database. In this case, input memory **234** may include a database of e-mail addresses and incoming telephone numbers arranged in a table format. Particular incoming telephone numbers can trigger different modes within the TAD **100**. The database may include a transmission schedule corresponding to the e-mail addresses and incoming telephone numbers stored in the database. Telephone numbers, corresponding e-mail addresses, and corresponding schedules may be input through input device **216** to develop the database. Caller ID service transfers the telephone number of an incoming call to TAD **100** between the first and second rings. Using caller ID, processor **200** searches the database of telephone numbers in input memory **234** to detect a match with the telephone number of the incoming call. If a match is found, processor **200** e-mails the unsent voice messages to the corresponding destination e-mail address based on the corresponding schedule.

The caller ID data may also include a name of the caller and the time of the call. The processor **200** may search for a match between any portion of the caller ID information, and enter a particular mode based on a match of that portion of the caller ID data with the database. For instance, an area code of an incoming call, a last name of a caller, or a time of a call may trigger the sending of unsent voice messages by e-mail to the corresponding destination e-mail address based on the corresponding schedule.

The converted text message may be electronically transmitted to more than one destination address. The function may be selectively disabled to prevent transmission to any destination addresses. Additionally, the destination address may be determined based on call related information such as caller ID data. For example, a first programmed telephone number may correspond to a first programmed e-mail address to which voice messages are e-mailed. A second programmed telephone number may correspond to a second programmed e-mail address. A third programmed telephone number may correspond to both a first and second e-mail address, and a fourth programmed telephone number may correspond to no e-mail address.

E-mail program memory **220** stores a program for sending an e-mail message with attached voice messages. The e-mail program is a conventional program for implementing e-mail functions. E-mail program memory **220** also stores standard e-mail messages indicating the status of the TAD **100**. For instance, standard messages may be pre-programmed but sent after being triggered by a match found by the processor **200**. For instance, one pre-programmed message may indicate the number of unsent voice messages stored in the voice message portion of RAM **202**.

A counter **226** counts the number of unsent voice messages. An example of a standard e-mail message may be "*You have received N voice message(s)*", where N indicates the number of received voice messages which were not previously e-mailed. The e-mail message is prepared for transmission as ASCII text. The e-mail message may include attachments corresponding to the voice message(s) stored in the voice message portion of RAM **202**.

The voice messages compressed by DSP **206** are converted to any commercial audio file format by an application program either in DSP **206** or processor **200**. Alternatively, the computer **112** may include software to convert the voice messages to any commercial audio file format. An example of an audio file format is a .WAV file format developed by Microsoft. Other examples are .AU, .SND, .VCE, .VOX, .SMP, .VOC, .VBA, or .PCM files. The voice message may also be an MPEG file for e-mailing a message left by a video telephone. Alternatively, the file may be the unformatted data as stored in the voice messaging device. The voice messages in audio file format are attached to e-mail messages by the e-mail program. The destination computer **112** (FIG. 1) will subsequently extract the attached voice messages from e-mail received from TAD **100**, and convert the voice message from the selected audio format to audio for playback using a sound card and speakers (not shown).

Modem **208** supports a number of different protocols. When modem **208** connects with a second modem at the ISP **106**, the two modems negotiate to find a common protocol over which to send the e-mail message and attachment.

Clock generator **228** monitors the time at which each voice message is received by the TAD **100**. The day, date and/or time each voice message is received may be stored along with the voice message in the voice message portion of RAM **202**. This information may accompany the voice message attached to the e-mail sent to the destination e-mail address.

Referring back to FIG. 1, the e-mail messages with attachments are read and attached voice message files are played back at computer **112** in a conventional manner. To receive the e-mail and attached files, a user of computer **112**, simply logs onto his e-mail account and downloads mail from a mailbox on a mail server of ISP **110**.

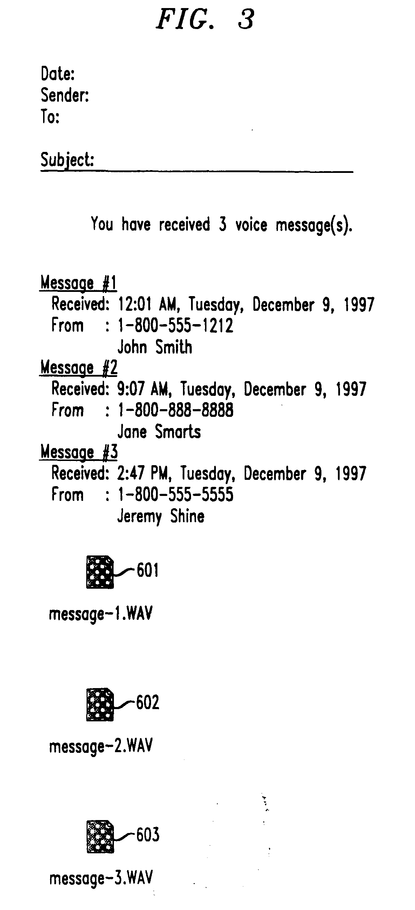

FIG. 3 shows an example e-mail message which indicates "*You have received 3 voice messages*". The incoming message also indicates that three attached voice files **601-603** were also sent with the e-mail message. A time, day and date stamp and Caller ID information may also accompany each message. The attached voice files **601-603** are then activated individually to hear the respectively encoded voice message. Computer **112** may also include speech synthesis software to vocally synthesize the day, date and/or time of the voice message with the playback of each attached voice message.

FIG. 4 is a flow diagram illustrating an operation of the TAD **100** as controlled by processor **200**. When the automatic e-mailing function is enabled, a voice message is received and recorded in voice message memory at step **S1**. At step **S2**, the TAD **100** waits for the time at which the schedule indicates that an e-mail message is to be sent with the stored voice message as an attached audio format file. At step **S3**, TAD **100** converts a recorded voice message to an audio file format. At step **S4**, TAD **100** prepares the standard e-mail message. At step **S5**, TAD **100** attaches the converted recorded voice message to the prepared standard e-mail message. At step **S6**, TAD **100** accesses the ISP **106** and sends the e-mail message and attachment to the e-mail address. At step **S7**, TAD **100** monitors for completion of the call and then goes on-hook.

As a result of the present invention, a remote user does not have to repeatedly call the TAD **100** to check for messages, nor pay telephone charges to repeatedly dial in to the TAD **100** to check for voice messages. Rather, voice messages are automatically sent to a destination e-mail address over the Internet either based on a pre-programmed e-mail destination address or as triggered by a portion of caller ID information received with the incoming call. Furthermore, multiple destination e-mail addresses may be programmed into TAD **100** to inform a group about a received voice message. At the remote computer, e-mailed voice messages may be placed on removable mass storage media and stored as a record of the voice message.

## Claims

1. A voice message storage system comprising:
a memory for storage of a received voice message;
a processor to operate an electronic messaging program, and to prepare said voice message for electronic transmission; and
a transmission device to automatically send said prepared voice message to a destination electronic messaging address.

2. The voice message storage system according to claim 1, wherein:
said electronic transmission is e-mail.

3. The voice message storage system according to claim 1, wherein:
said input device further accepts a schedule for sending said voice message to said destination electronic messaging address; and
said transmission device sends said voice message to said destination electronic messaging address based on said schedule.

4. The voice messaging storage system according to claim 3, wherein:
said schedule indicates to automatically send said voice message substantially immediately after said voice message is received.

5. The voice messaging system according to claim 3, wherein:
said schedule indicates to automatically send said voice message at a specified time.

6. The voice messaging system according to claim 3, wherein:
said schedule indicates to automatically send electronic messaging periodically.

7. The voice messaging system according to claim 3, wherein:
said input device accepts a plurality of destination electronic messaging addresses and a plurality of schedules; and
said transmission device automatically sends said voice message to each of said plurality of destination electronic messaging addresses based on each of said respective plurality of schedules.

8. The voice messaging system according to claim 1, wherein:
said memory stores a plurality of voice messages; and
said plurality of voice messages are automatically electronically transmitted.

9. The voice messaging system according to claim 1, said processor further comprising:
an audio format program to convert said voice message to an audio file format; and
said electronic messaging program attaching said audio file format to an e-mail message.

10. The voice messaging system according to claim 9, wherein:
said audio file format is a .WAV file.

11. The voice messaging system according to claim 1, further comprising:
a counter to count a number of voice messages stored in said memory; and
said number of voice messages being transmitted in said electronic message to said destination electronic messaging address.

12. The voice messaging system according to claim 1, further comprising:
a clock device to link a day, a date and a time to said voice message stored in said memory; and
said electronic messaging program includes said day, said date, and said time with said voice message.

13. The voice messaging system according to claim 1, further comprising:
an input memory to store a database of caller ID information and corresponding destination electronic messaging addresses.

14. The voice messaging system according to claim 13, further comprising:
a processor to determine a match between an incoming telephone number and a telephone number in said database of caller ID information; and wherein:
said transmission device automatically sends said voice message to said corresponding destination electronic messaging address based said match.

15. A method for sending a voice message to a destination electronic messaging address, comprising:
storing a received voice message;
preparing said received voice message as an electronic message; and
automatically transmitting said received voice message to a destination electronic messaging address.

16. The method for sending a voice message to a destination electronic messaging address according to claim 15, further comprising:
sending said voice message over the Internet to said destination electronic messaging address, said electronic messaging being e-mail.

17. The method for sending a voice message to a destination electronic messaging address according to claim 15, further comprising:
sending a pre-programmed text message with said voice message.

18. The method for sending a voice message to a destination electronic messaging address according to claim 15, further comprising:
inputting a schedule for sending said voice message to said destination electronic messaging address; and
sending said voice message to said destination electronic messaging address based on said schedule.

19. The method for sending a voice message to an electronic messaging address according to claim 18, wherein:
said schedule indicates to automatically send said voice message substantially immediately after said voice message is stored.

20. The method for sending a voice message to an electronic messaging address according to claim 18, wherein:
said schedule indicates to automatically send said voice message at a specified time.

21. The method for sending a voice message to an electronic messaging address according to claim 18, wherein:
said schedule indicates to automatically send said voice message on a periodic basis.

22. The method for sending a voice message to an electronic messaging address according to claim 17, further comprising:
inputting a schedule for sending said text message and said voice message to said destination electronic messaging address; and
sending said electronic message and said voice message to said destination electronic messaging address based on said schedule.

23. The method for sending a voice message to an electronic messaging address according to claim 15, further comprising:
converting said voice message to an audio file format; and
attaching said audio file format voice message to said electronic message.

24. The method for sending a voice message to an electronic messaging address according to claim 23, wherein:
said audio file format is a .WAV file.

25. The method for sending a voice message to an electronic messaging address according to claim 15, further comprising:
converting said voice message to a video file format.

26. The method for sending a voice message to an electronic messaging address according to claim 25, wherein:
said video file format is a MPEG file.

27. A voice message storage system comprising:
an input device to accept a destination electronic messaging address;
a memory for storage of a received voice message;
a processor to operate an electronic messaging program; and
a transmission device to automatically send said voice message to said destination electronic messaging address based on said electronic messaging program.
